# EUROPEAN PATENT APPLICATION

(11) **EP 2 753 128 A2**
(43) Date of publication of application: **09.07.2014**
(21) Application number: 13199696.9
(22) Date of filing: 27.12.2013
(51) Int. Cl.: H04W 48/20

(54) **Method of controlling connection to wireless access point and mobile terminal supporting the same**

(30) Priority: 02.01.2013 KR 20130000155
(71) Applicant: Samsung Electronics Co., Ltd, Gyeonggi-do 443-742 (KR)
(72) Inventor: Kill, Kwangmin, 443-742 Gyeonggi-do (KR); Oh, Huncheol, 443-742 Gyeonggi-do (KR)
(74) Representative: Nederlandsch Octrooibureau

(57) **Abstract**

A method and mobile terminal manage a connection to a wireless access point. The method includes searching for a designated wireless access point registered in a preset connection designation list by use of a Wi-Fi module. The method also includes establishing, when a designated wireless access point is found, a connection to the found designated wireless access point.

## Description

### TECHNICAL FIELD

The present disclosure relates to controlling connection to wireless access points and, more particularly, to a method of controlling connection to wireless access points and a mobile terminal supporting the same, wherein the mobile terminal is allowed to connect only to pre-designated wireless access points and is prevented from searching for additional wireless access points when connected to a designated wireless access point according to settings, so that battery power can be saved and resource expenditure due to unnecessary search and connection attempts can be avoided.

### BACKGROUND

Mobile terminals supporting communication have entered into widespread use due to small sizes thereof enabling ease of portability. Recently, increased touchscreen sizes, advanced hardware and software support and diversified digital content have dramatically accelerated popularization of mobile terminals.

Such a mobile terminal may include multiple communication modules and provide communication services using the communication modules. In particular, a mobile terminal supporting mobile communication includes a mobile communication module and provides at least one of voice call services, messaging services, and data services using the mobile communication module. However, as a typical mobile communication service is charged on a per-call basis or on a data-amount basis, it is nearly impossible for a user with an ordinary subscription to receive an unlimited service based on a mobile communication module. As mobile communication modules are designed to provide services to users in motion, they typically have a low data rate. Recently, as LTE networks are being deployed, data rates have increased. However, LTE coverage is not yet nationwide and stable LTE services are not available at all places. To remedy such shortcomings, wireless access points are increasingly deployed to support data communication. Since wireless access points do not cover all places, mobility may be limited. However, when a user uses a communication service through a wireless access point at a fixed place, the user can expect a relatively high data rate. In addition, the user does not have to pay an extra charge because communication through a wireless access point tends to be provided free of charge.

As described above, wireless access points are not deployed at all places. Hence, although the communication module conducting a search for a wireless access point is always turned on, a user wishing to receive a service through a wireless access point may fail to remain in a connected state. When the communication module is always turned on, too many wireless access points may be found and registered. This may indicate performance of unnecessary search and connection attempts causing severe battery power consumption. In addition, some wireless access points require encryption for security reasons. Such wireless access points, although successfully located, cannot be used for a regular communication service.

### SUMMARY

To address the above-discussed deficiencies of the prior art, it is a primary object to provide a method of controlling connection to wireless access points and a mobile terminal supporting the same wherein the search for wireless access points is appropriately controlled so that connection attempts and searches for and connection attempts to wireless access points are made in an optimum way.

Another object of the present disclosure is to provide a method of controlling connection to wireless access points and a mobile terminal supporting the same wherein the search for wireless access points is controlled so that a needed communication service is provisioned with low battery consumption and optimum radio resource utilization.

To achieve the objects, the present disclosure discloses a method for controlling connection to wireless access points, including: searching for a designated wireless access point registered in a preset connection designation list by use of a Wi-Fi module; and establishing, when a designated wireless access point is found, a connection to the found designated wireless access point.

In addition, the present disclosure discloses a mobile terminal capable of controlling connection to wireless access points, including: a Wi-Fi module connecting to a wireless access point; a storage unit storing a connection designation list in which at least one designated wireless access point is registered; and a control unit conducting a search based on the Wi-Fi module by controlling an operation to search for a designated wireless access point registered in the connection designation list.

According to the present disclosure described above, the method of controlling connection to wireless access points enables a mobile terminal to connect to a user designated wireless access point preferentially or to connect only to a designated wireless access point according to settings. When the mobile terminal is connected to a designated wireless access point, the method restrains the mobile terminal from making a search attempt for a different wireless access point. Hence, the mobile terminal may conserve battery power and radio resources needed to use a wireless access point.

In addition, through preferential search for a designated wireless access point and suppression of additional search, the present disclosure may reduce display of a popup window for unnecessarily selecting a wireless access point and reduce background processing needed for unnecessary search for a wireless access point.

In addition, the present disclosure discloses a method for managing a connection to a wireless access point, comprising searching for a wireless access point by use of a Wi-Fi module; determining, when the wireless access point has an attribute matching a preset attribute table, whether the attribute indicates connection; and establishing, in response to determining that the attribute indicates connection, a connection to the wireless access point, and not establishing, in response to determining that the attribute indicates non-connection, the connection to the wireless access point.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates an environment for access to wireless access points according to an embodiment of the present disclosure.
FIG. 2 illustrates an example embodiment of a block diagram of a mobile terminal shown in FIG. 1;
FIG. 3 illustrates an example embodiment of a detailed configuration of a control unit shown in FIG. 2;
FIG. 4 illustrates a flowchart of a method for controlling connection to wireless access points according to an embodiment of the present disclosure;
FIG. 5 illustrates a flowchart of a detailed procedure for searching for a wireless access point according to various embodiments of the present disclosure;
FIG. 6 illustrates a flowchart of another method for controlling connection to wireless access points according to various embodiments of the present disclosure;
FIG. 7 illustrates a screen representation of a connection designation list according to various embodiments of the present disclosure; and
FIG. 8 illustrates a setting screen for setting a connection designation list according to various embodiments of the present disclosure.

### DETAILED DESCRIPTION

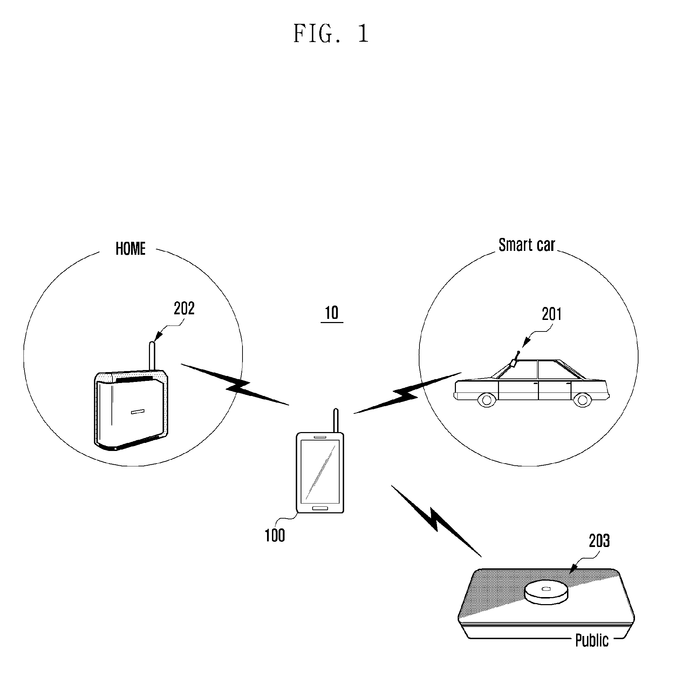

FIGURES 1 through 8, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device. Hereinafter, embodiments of the present disclosure are described in detail with reference to the accompanying drawings.

Detailed descriptions of well-known functions and structures incorporated herein may be omitted to avoid obscuring the subject matter of the present disclosure. Detailed descriptions of components having substantially the same configurations and functions may also be omitted.

In the drawings, some elements are exaggerated or only outlined in brief, and thus may be not drawn to scale. The present disclosure is not limited by relative sizes of objects and intervals between objects in the drawings.

FIG. 1 illustrates an environment to use wireless access points to describe how wireless access points are used according to an embodiment of the present disclosure.

Referring to FIG. 1, the wireless access point usage environment 10 may include a first wireless access point 201, a second wireless access point 202, a third wireless access point 203, and a mobile terminal 100. Here, although three wireless access points are deployed, the present disclosure is not limited thereto. As will be described later, a variety of wireless access points may be further deployed in the wireless access point usage environment 10.

In the wireless access point usage environment 10, the three wireless access points 201, 202 and 203, which are registered in the mobile terminal 100 by the user for accessibility, are located at different places in nearby surroundings. For example, the first wireless access point 201 may be placed in a car, which the user carrying the mobile terminal 100 may ride in. Here, the car may be a vehicle having the first wireless access point 201 that is designated for connection by the user of the mobile terminal 100. In other words, the first wireless access point 201 may be an access point (AP) contained in a connection designation list of the mobile terminal 100.

The second wireless access point 202 may be placed in the home or office. The second wireless access point 202 may be a private AP deployed for personal use of the user. The second wireless access point 202 may be an AP contained in the connection designation list of the mobile terminal 100. The second wireless access point 202 may be an AP to which an encryption key is assigned by the user. The mobile terminal 100 may have to pre-store the encryption key or to obtain the encryption key from the user and use the encryption key to connect to the second wireless access point 202.

The third wireless access point 203 may be a public AP. In particular, the third wireless access point 203 may be used by a service provider to provide data services to mobile terminals satisfying specific conditions. Such a third wireless access point 203 may be installed at one of various locations such as a subway station, theater, building and public place.

The mobile terminal 100 may add at least one of the first to third wireless access points 201, 202 and 203 to the connection designation list according to user control. In response to an activation request signal for a communication module such as a Wi-Fi module, the mobile terminal 100 may use the communication module to search for wireless access points in the vicinity thereof. When the Wi-Fi module is designed to be always turned-on, reception of an activation request signal therefor may be unnecessary. Here, the mobile terminal 100 may checks whether a found wireless access point is present on the connection designation list. When a found wireless access point is present on the connection designation list, the mobile terminal 100 may connect to the found wireless access point. After connection establishment to a specific wireless access point, the mobile terminal 100 may prevent the Wi-Fi module from searching for a nearby wireless access point. Prevention of a search for nearby wireless access points may be sustained until the mobile terminal 100 is moved or connection to the current wireless access point is released.

During a search process, the mobile terminal 100 may search only for a wireless access point that is present on the connection designation list or may check whether a found wireless access point is on the connection designation list. When a wireless access point that is present on the connection designation list is found, the mobile terminal 100 may connect to the designated wireless access point. Here, the mobile terminal 100 may assign attributes to wireless access points and define operation schemes according to the attributes. Thereby, the mobile terminal 100 may efficiently support suspension of an unnecessary search for wireless access points, unnecessary display of a popup window for selecting a wireless access point, and unnecessary background processing related to a search for wireless access points.

As described above, in the present disclosure, the mobile terminal 100 may search for a wireless access point registered in a preset connection designation list in an environment where a variety of wireless access points are deployed and connect only to a wireless access point registered in the connection designation list. When no wireless access point registered in the connection designation list is found, the mobile terminal 100 may suspend a search for a nearby wireless access point for a preset time or until a given condition such as non-movement is satisfied. When a connection to a wireless access point registered in the connection designation list is established, the mobile terminal 100 may temporarily stop a search for a nearby wireless access point so that an unnecessary search for a nearby wireless access point is not conducted.

Next, a detailed description is given of components of the mobile terminal 100 and roles of the components for the present disclosure with reference to the drawings.

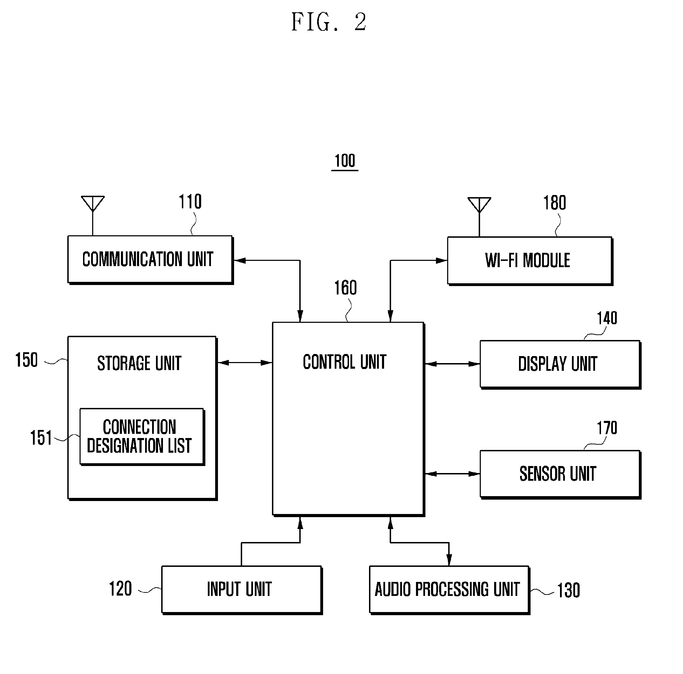

FIG. 2 illustrates a block diagram of an exemplary embodiment of the mobile terminal 100 according to an embodiment of the present disclosure.

Referring to FIG. 2, the mobile terminal 100 may include a communication unit 110, an input unit 120, an audio processing unit 130, a display unit 140, a storage unit 150, a Wi-Fi module 180, a sensor unit 170, and a control unit 160.

The mobile terminal 100 having the above configuration uses the Wi-Fi module 180 to search for nearby wireless access points and refers to the connection designation list 151 stored in the storage unit 150 to check whether a designated wireless access point present on the connection designation list 151 is found. When a designated wireless access point present on the connection designation list 151 is found, the mobile terminal 100 may connect to the designated wireless access point and may not conduct a further search for a different wireless access point. During use of a communication service after connection to the designated wireless access point, the mobile terminal 100 may not conduct a search for or establish a connection to a different wireless access point. Hence, the mobile terminal 100 may support a seamless communication service while saving battery power and efficiently using radio resources by not conducting an unnecessary search for a wireless access point or not establishing an unnecessary connection to a wireless access point.

The communication unit 110 may be one of various communication modules according to the type of the mobile terminal 100. For example, the communication unit 110 may be at least one of a wireless communication module, a wired communication module and a mobile communication module. When the mobile terminal 100 communicates through only the Wi-Fi module 180, the communication unit 110 may be omitted. The communication unit 110 may establish a communication channel with 2G, 3G or 4G network equipment to provide a communication service identical to that provided through the Wi-Fi module 180. When the Wi-Fi module 180 is activated to establish a data communication channel according to user manipulation while the communication unit 110 supports a data communication service through a specific communication channel, the data communication service channel supported by the communication unit 110 may be placed in a deactivated state. In this case, the communication unit 110 may support a voice call channel or a message service channel in a standby state. Hence, while a data communication channel is operated on the basis of the Wi-Fi module 180, the communication unit 110 may support voice call placement and reception or message transmission and reception.

The input unit 120 is configured to generate various input signals necessary for operation and manipulation of the mobile terminal 100. The input unit 120 may include various components according to signal generation schemes of the mobile terminal 100. For example, when the display unit 140 is a touchscreen, the input unit 120 may be realized using a display panel outputting a key map and a touch panel defining a touch region on the display panel. The input unit 120 may include a key button, keypad, side key, and home key. The input unit 120 may also include a touch pen and a pen touch panel supporting manipulation of the touch pen.

The input unit 120 may generate, according to user manipulation, an input signal for requesting activation of the Wi-Fi module 180, an input signal for generating the connection designation list 151 stored in the storage unit 150, an input signal for changing settings of entries in the connection designation list 151, an input signal for adding a new entry to the connection designation list 151, and an input signal for releasing a connection to a designated wireless access point. The generated input signals are sent to the control unit 160 and may be used as commands for executing corresponding functions.

The audio processing unit 130 includes a speaker to output various audio data generated during operation of the mobile terminal 100. When the mobile terminal 100 supports a call handling function or recording function, the audio processing unit 130 may also include a microphone to collect audio data. In response to an input signal for requesting activation of the Wi-Fi module 180, the Wi-Fi module 180 may be activated to perform a search for a nearby wireless access point. When a designated wireless access point registered in the connection designation list 151 is found, the audio processing unit 130 may output a guide message indicating success in finding a designated wireless access point. In particular, the audio processing unit 130 may output a guide message containing the name assigned to the found wireless access point. Hence, the user may indentify a wireless access point to which the Wi-Fi module 180 is connected. In addition, the audio processing unit 130 may output a guide message indicating release of a connection to a designated wireless access point and output a guide message indicating transition to a data service channel based on the communication unit 110. Output of a guide message may be skipped according to user settings or designer decision.

The display unit 140 may output various screens needed for operation of the mobile terminal 100. For example, the display unit 140 may output a screen for a web service connected through the communication unit 110 or the Wi-Fi module 180. To support display and input functions, the display unit 140 may be composed of a touch panel and a display panel, where effective regions corresponding to various virtual key maps displayed on the display panel may be set on the touch panel.

To support access to a pre-designated wireless access point of the present disclosure, the display unit 140 may output a setting screen for setting the connection designation list 151, a screen for outputting a list of nearby wireless access points located by the Wi-Fi module 180, a screen for connection using the Wi-Fi module 180, and a screen for supporting a communication service based on the Wi-Fi module 180. The setting screen may include a screen interface for presenting a list of newly found wireless access points, a screen interface for registering a new wireless access point among newly found wireless access points as a designated entry, and a screen interface for deregistering a designated wireless access point being registered as a designated entry. The list output screen may present designated wireless access points registered in the connection designation list 151 in a visually different form from other wireless access points.

The storage unit 150 may store various programs needed for operation of the mobile terminal 100, programs realizing various functions of the mobile terminal 100, and a variety of data needed for and generated by program execution. In particular, the storage unit 150 may store a connection designation list 151 to support access to a designated wireless access point of the present disclosure. The storage unit 150 may store a program to operate the Wi-Fi module 180. As described in connection with FIG. 1, the connection designation list 151 may be created by selecting a wireless access point among wireless access points located in the vicinity of a specific place accessible by the user. For example, when the user rides in a car and activates the Wi-Fi module 180, the mobile terminal 100 may search for a first wireless access point 201 installed in the car and the user may identify the first wireless access point 201 and register the same in the connection designation list 151. Later, when the first wireless access point 201 is found during a search in the vicinity using the Wi-Fi module 180, the mobile terminal 100 may connect to the first wireless access point 201 first.

The Wi-Fi module 180 may be a type of communication module supporting connection to a designated wireless access point. Independently of the communication unit 110 supporting access to a mobile communication network, the Wi-Fi module 180 may search for and connect to a designated wireless access point according to user activation request. In particular, during a search process, the Wi-Fi module 180 checks whether a designated wireless access point contained in the connection designation list 151 is found and may present a newly found wireless access point as an item of "other" category. Wireless access points presented as an item of "other" category may be used to newly configure the connection designation list 151.

The Wi-Fi module 180 may conduct a search in the vicinity at regular intervals and connect to, when a designated wireless access point contained in the connection designation list 151 is found, the found designated wireless access point. Thereafter, the Wi-Fi module 180 may not perform a further search according to settings. Such stoppage of a search may be sustained until connection to the current designated wireless access point is released or a user action is generated.

The sensor unit 170 may include various sensors related to states of the mobile terminal 100. In particular, the sensor unit 170 may include an acceleration sensor to sense movement of the mobile terminal 100, a movement detection sensor to sense movement on the basis of location information, a GPS tracking sensor, and a location identification sensor for location identification. The sensor unit 170 may be activated at regular intervals to sense movement of the mobile terminal 100 under a specific condition such as occurrence of an event that the Wi-Fi module 180 conducts a connection to a specific wireless access point. The sensor unit 170 may be activated to sense movement of the mobile terminal 100 when electric power is supplied to the Wi-Fi module 180. Movement of the mobile terminal 100 sensed by the sensor unit 170 may be used for release of connection to a wireless access point and for transition to operate the communication unit 110. Movement information collected by the sensor unit 170 in a state where connection to a designated wireless access point registered in the connection designation list 151 is established may be used to issue a command for stopping a search for a nearby wireless access point. Movement information collected by the sensor unit 170 may be used to release connection to a designated wireless access point based on the connection designation list 151 and to enter a regular connection mode, in which a connection attempt is made as to a located wireless access point regardless of the type thereof. When information collected by the sensor unit 170 indicates non-movement, this information may also be used to issue a command to enter the regular connection mode. As described above, information collected by the sensor unit 170 may be used in various ways for connection to a wireless access point and for switching to the communication unit 110.

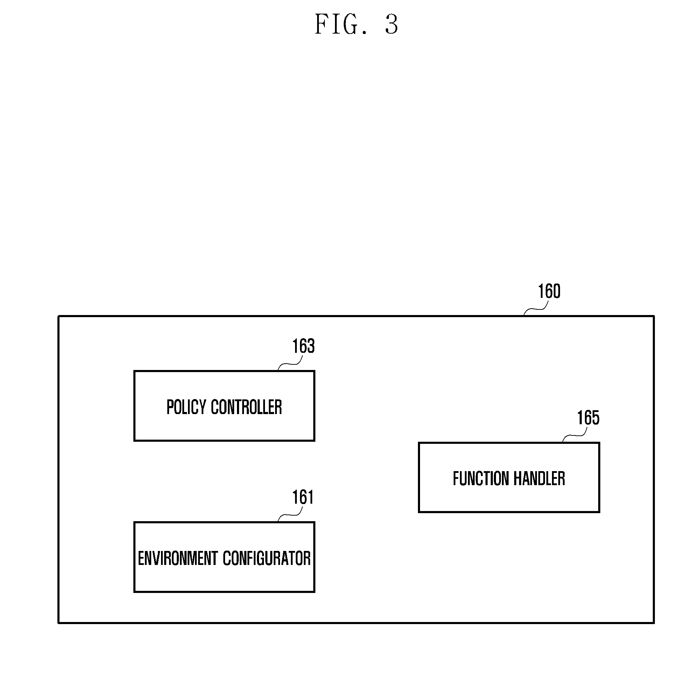

The control unit 160 may control overall signal flow for operation of the mobile terminal 100 and control processing, distribution and storage of data. To this end, the control unit 160 may have a configuration as shown in FIG. 3.

FIG. 3 illustrates a detailed configuration of an exemplary embodiment of the control unit 160 in the mobile terminal 100.

Referring to FIG. 3, the control unit 160 may include a policy controller 163, an environment configurator 161, and a function handler 165.

The environment configurator 161 enables the user to add at least one of wireless access points to the connection designation list 151 as a designated wireless access point. The environment configurator 161 controls the display unit 140 to output a setting screen as described before and may set attributes to designated wireless access points according to an input signal from at least one of the display unit 140 acting as an input means and the input unit 120. In particular, the environment configurator 161 may provide a record of searches for wireless access points to the user, and the user may determine a designated wireless access point with reference to the record of searches for wireless access points. To facilitate this, the environment configurator 161 may provide the record of searches for wireless access points together with location information. When names are assigned to wireless access points, the environment configurator 161 may provide name information. That is, the environment configurator 161 may identify SSID information of wireless access points located during a search process and output name information corresponding to the SSID information together with a record of searches for wireless access points.

The environment configurator 161 may collect location information of a wireless access point during a search therefor, or may identify the location of a wireless access point using address information thereof. When obtained location information of a wireless access point is represented as latitude and longitude, the environment configurator 161 may map the location information onto map information, placing the wireless access point on a map. Hence, the user may readily identify the place at which a particular wireless access point is installed and easily designate a wireless access point needed at a desired place.

As described above, attribute setting for a wireless access point may be individually performed by the environment configurator 161. Alternatively, attributes may be set to a group of wireless access points according to user selection. For example, in the event that wireless access points are separately deployed by different communication service providers, the environment configurator 161 may set attributes so that only wireless access points deployed by a given communication service provider may be designated. Hence, in the event that the user of the mobile terminal 100 has subscribed to a specific communication service provider and has permission to use wireless access points installed by the communication service provider at a fixed charge or free of charge, the environment configurator 161 enables the user to register a group of wireless access points installed by the communication service provider in the connection designation list 151. To this end, the environment configurator 161 may present a variety of classification attributes on the display unit 140 for designation of wireless access points. This will be described in more detail with reference to the drawings. As described above, the environment configurator 161 may support composition of a connection designation list 151 of the present disclosure.

The policy controller 163 is configured to specify how to handle a designated wireless access point contained in the connection designation list 151 in a search process, how to connect to a designated wireless access point after a search, and how to operate the Wi-Fi module 180 after connection establishment. Specifically, when the user activates the Wi-Fi module 180, the policy controller 163 may supply power to the Wi-Fi module 180 and initialize the Wi-Fi module 180. Here, the policy controller 163 may refer to the connection designation list 151 stored in the storage unit 150. The policy controller 163 may control an operation to search for and connect to a nearby wireless access point with reference to the connection designation list 151.

More specifically, the policy controller 163 may check whether a designated wireless access point contained in the connection designation list 151 is found. When a designated wireless access point contained in the connection designation list 151 is found, the policy controller 163 may control an operation to connect to the designated wireless access point. Thereafter, the policy controller 163 may control an operation to deactivate a task performing a search for a wireless access point at regular intervals.

The policy controller 163 may establish a connection with reference to designated wireless access points registered in the connection designation list 151. For example, when the car is parked at the home, the mobile terminal 100 may locate the first wireless access point 201 installed in the car and the second wireless access point 202 installed at the home and may also locate the third wireless access point 203 installed at a nearby building for public use in some cases. Here, the wireless access points 201, 202 and 203 may have assigned priorities. Namely, the second wireless access point 202 may have the highest priority, the first wireless access point 201 installed in the car may have the next highest priority, and the third wireless access point 203 may have the lowest priority. Hence, when multiple designated wireless access points registered in the connection designation list 151 are located, the policy controller 163 may establish a connection to one of the located designated wireless access point with the highest priority. Here, after connection establishment with the designated wireless access point, the policy controller 163 may control an operation not to conduct a search until the connection is released or an input signal requesting connection release is received.

As another example, in the event that the user carrying the mobile terminal 100 drives the car into a building, the mobile terminal 100 may locate the first wireless access point 201 and the third wireless access point 203. When the user has assigned a higher priority to the first wireless access point 201 installed in the car than that assigned to the third wireless access point 203 installed in a building for public use, the mobile terminal 100 may establish a connection to the first wireless access point 201. On the contrary, when the third wireless access point 203 has a higher priority than that of the first wireless access point 201, the mobile terminal 100 may establish a connection to the third wireless access point 203.

When a designated wireless access point contained in the connection designation list 151 is not found, the policy controller 163 may control an operation to conduct a search at regular intervals. When no designated wireless access point is contained in the connection designation list 151, the policy controller 163 may enter the regular connection mode and establish a connection to a wireless access point designated by the user or having the highest received signal quality among found wireless access points. Here, the policy controller 163 may classify the found wireless access points into "other" category, so that the user may newly register a desired one of the found wireless access points in the connection designation list 151.

In addition, the policy controller 163 may restrict a search for and connection to a wireless access point through usage of the sensor unit 170 or according to information collected by the sensor unit 170. More specifically, when an activation request for the Wi-Fi module 180 is received before a connection to a wireless access point is established, the policy controller 163 may control an operation to sustain an existing communication service through the communication unit 110 although activation of the Wi-Fi module 180 is requested according to reception of information indicating movement from the sensor unit 170. Thereafter, when information indicating non-movement is received from the sensor unit 170, the policy controller 163 may control the Wi-Fi module 180 to conduct a search in the vicinity. Here, the policy controller 163 may temporarily stop the Wi-Fi module 180 while in motion, and may re-activate the Wi-Fi module 180 to perform a search for a designated wireless access point on the basis of the connection designation list 151 while not in motion.

Alternatively, when information indicating movement is received from the sensor unit 170, the policy controller 163 may control an operation to search for a designated wireless access point registered in the connection designation list 151 one time. When a designated wireless access point registered in the connection designation list 151 is found, the policy controller 163 may control an operation to establish a connection to the found designated wireless access point and to stop additional search. When a designated wireless access point registered in the connection designation list 151 is not found, the policy controller 163 may block supply of power to the Wi-Fi module 180 until information indicating non-movement is received from the sensor unit 170 or may enter the regular connection mode to search for and connect to a wireless access point not registered in the connection designation list 151. Here, the search process may be performed one time or several times according to designer selection. To suppress frequent task switching, the policy controller 163 may actually perform such a control operation only when information indicating movement or non-movement from the sensor unit 170 is sustained for a preset time. In addition, when the mobile terminal 100 remains within a radius such as wireless coverage of a wireless access point, the policy controller 163 may determine that the mobile terminal 100 is not in motion (non-movement).

When information indicating movement is received from the sensor unit 170 while connected to a designated wireless access point registered in the connection designation list 151, the policy controller 163 may control an operation to sustain the current connection to the designated wireless access point. Here, the policy controller 163 may control an operation not to search for a different wireless access point while in motion. Alternatively, when information indicating movement is received from the sensor unit 170 while connected to a designated wireless access point registered in the connection designation list 151, the policy controller 163 may support a communication service through the communication unit 110 while in motion and may newly search for and connect to a designated wireless access point registered in the connection designation list 151 upon stoppage of movement.

When a connection to a located designated wireless access point is established in response to generation of an input signal requesting activation of the Wi-Fi module 180, the function handler 165 may support a communication service through the connected designated wireless access point according to preset settings or user request. Likewise, the function handler 165 may support a communication service according to or user request even when a connection to a wireless access point not registered in the connection designation list 151 is established. In particular, the function handler 165 may support adaptive communication service switching between a mobile communication service using a mobile communication network such as a 3G or LTE network through the communication unit 110 and a communication service using a wireless access point through the Wi-Fi module 180. To support seamless communication during switching between a communication service based on mobile communication and a communication service based on a wireless access point, the function handler 165 may control an operation to transfer data received for the current communication service to the other communication network and to receive and output the following data for the current communication service.

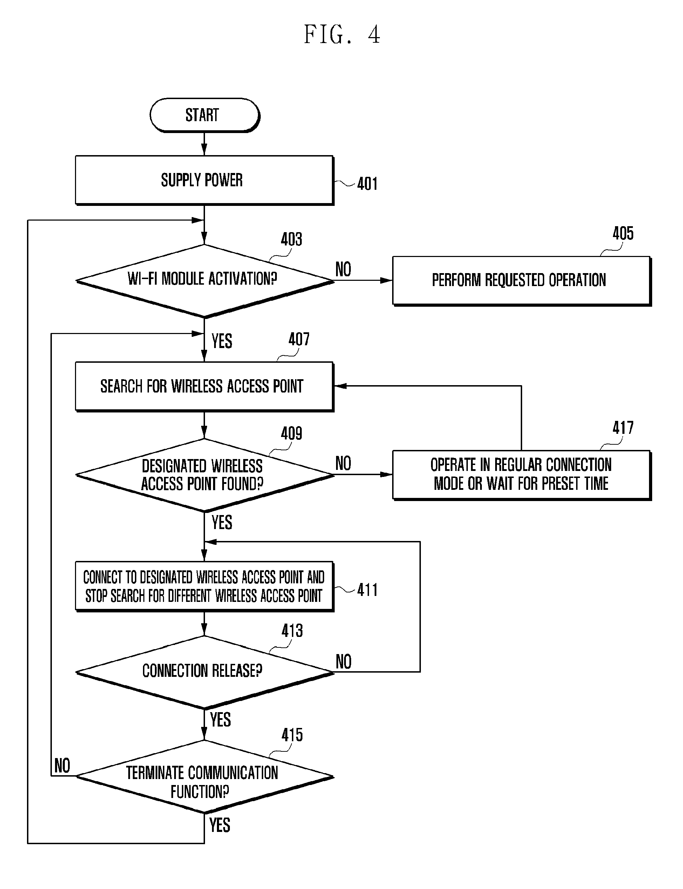

FIG. 4 illustrates a flowchart of a method for controlling connection to wireless access points according to an embodiment of the present disclosure.

Referring to FIG. 4, in the method for controlling connection to wireless access points, the control unit 160 of the mobile terminal 100 supplies operating power from a power source to the components of the mobile terminal 100 (401). Thereafter, upon reception of an input event from one of the input unit 120 and the display unit 140 acting as an input means, the control unit 160 checks whether the input event is an event requesting activation of the Wi-Fi module 180 (403). When the input event is not an event requesting activation of the Wi-Fi module 180, the control unit 160 may perform an operation corresponding to the input event (405). For example, the control unit 160 may control an operation to perform Internet access through the communication unit 110, playback of a selected file, file editing, or file transfer.

The control unit 160 performs a search for a wireless access point (407). The control unit 160 checks whether a designated wireless access point registered in the connection designation list 151 is present among located wireless access points (409). When a designated wireless access point registered in the connection designation list 151 is found, the control unit 160 establishes a connection to the found designated wireless access point (411). Additionally, the control unit 160 may deactivate a search function, which searches for a nearby wireless access point at regular intervals, to stop a search.

Thereafter, the control unit 160 checks whether an event for releasing the connection to the designated wireless access point is generated (413). When a connection release event is not generated, the control unit 160 may return to step 411 to maintain the existing connection. When a connection release event is generated at step 413, the control unit 160 checks whether an input event for terminating communication based on the Wi-Fi module 180 is generated (415). When an input event for terminating communication is not generated, the control unit 160 may return to step 407 to continue communication based on the Wi-Fi module 180. When an input event for terminating communication is generated, the control unit 160 may return to step 403 to continue the process.

When a designated wireless access point registered in the connection designation list 151 is not found at step 409, the control unit 160 may support the regular connection mode or wait for a preset time (417). Thereafter, the control unit 160 returns to step 407. During the regular connection mode, the control unit 160 may establish a connection to a wireless access point, which is specified by the user or has acceptable received signal strength without security restrictions, among located wireless access points.

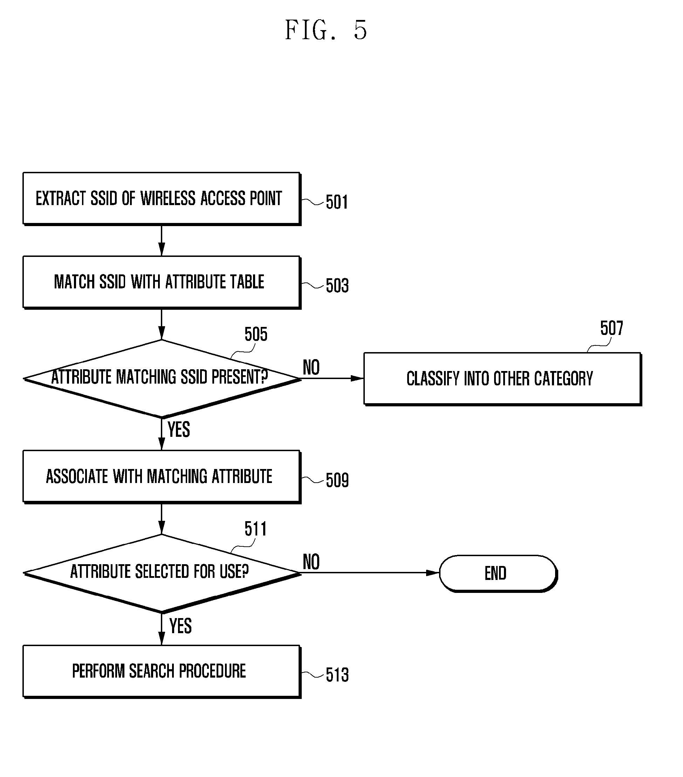

FIG. 5 illustrates a flowchart of a detailed procedure for searching for and handling a wireless access point performed by the mobile terminal 100 according to an embodiment of the present disclosure.

Referring to FIG. 5, the control unit 160 activates the Wi-Fi module 180 to perform a search for a wireless access point in the vicinity and to receive information from each wireless access point. The control unit 160 extracts SSID information and other information such as address information from the information provided by a wireless access point (501). The information provided by a wireless access point may include SSID information, address information (Address: 00:11:22:33:44:55), ESSID information (ESSID: "network-essid"), mode information (Mode: Master), channel information (Channel: 11), frequency information (Frequency: 2.462 GHz), signal quality information (Quality=100/100, Signal level: -47dBm, Noise level: -100dBm), and encryption information (Encryption key: off). Here, the wireless access point may treat SSID information as private, in which case the control unit 160 may receive only address information and location information such as GPS information from the wireless access point.

The control unit 160 compares wireless access point information such as SSID information with a preset attribute table (503). Here, the attribute table may be a table specifying information elements associated with individual attributes. For example, the attribute table may contain, for wireless access points, "network ID" attribute, "connection permission" attribute, "public" attribute, "channel" attribute, and "address" attribute according to an agreement with a specific communication service provider. The attribute table may also contain "location" attribute. In the attribute table, high-level and low-level attributes may be specified. For example, user defined attributes such as Home, Smart Car, Office and Public may be assigned as a high-level attribute to specific wireless access points, and attributes such as "connection permission" (permission or prohibition of connection to a wireless access point), "location" and "SSID" may be assigned as a low-level attribute to the wireless access points. When "SSID" attribute is set to be private, address information or location information based on GPS may be applied.

The control unit 160 checks whether "SSID" attribute of a found wireless access point matches the attribute table (505). When an attribute matching "SSID" of the found wireless access point is not present in the attribute table, the control unit 160 classifies the found wireless access point into "other" category (507).

When an attribute matching the attribute of the wireless access point is present in the attribute table, the control unit 160 registers the wireless access point as having the matching attribute (509). The control unit 160 checks whether the matching attribute is an attribute selected for use (namely, an attribute indicating connection initiation to the associated found wireless access point) (511). When the matching attribute is not an attribute selected for use, the control unit 160 ends the procedure without making a connection attempt. When the matching attribute is an attribute selected for use, the control unit 160 initiates a connection procedure (513).

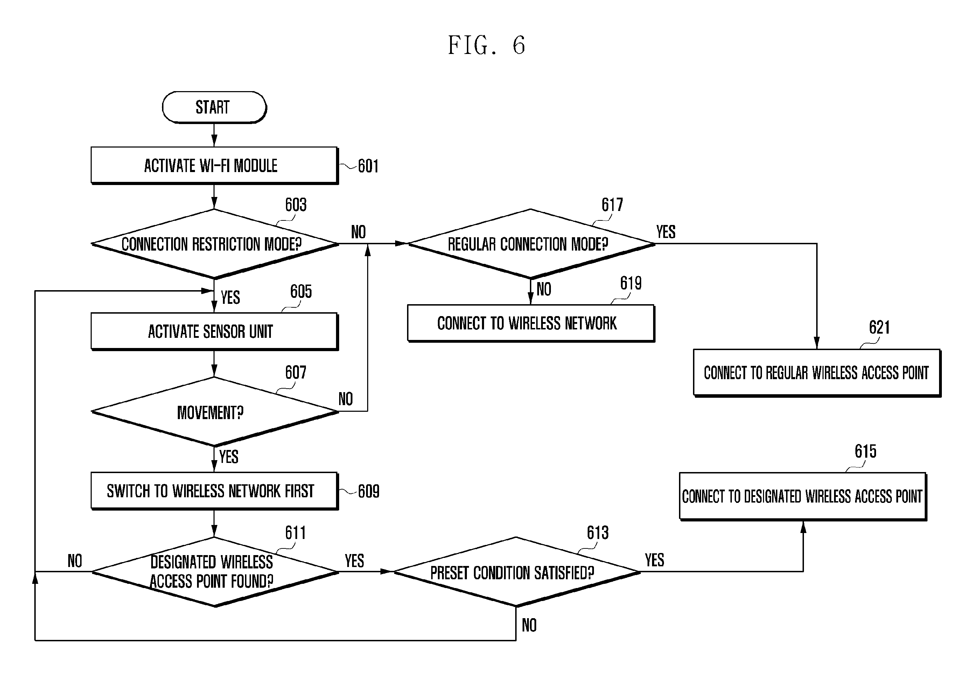

FIG. 6 illustrates a flowchart of a procedure for handling movement during connection control to a wireless access point according to an embodiment of the present disclosure.

Referring to FIG. 6, the control unit 160 activates the Wi-Fi module 180 (601), and checks whether a connection restriction mode is activated as to a designated wireless access point (603). When the connection restriction mode is activated, the control unit 160 activates the sensor unit 170 to detect movement (605). The control unit 160 determines whether the mobile terminal 100 is in motion by examining information received from the sensor unit 170 (607). When the mobile terminal 100 is not in motion, the control unit 160 checks activation of the regular connection mode (617) and may support a function corresponding to the checking result.

When the mobile terminal 100 is determined to be in motion on the basis of information from the sensor unit 170, the control unit 160 performs switching to a wireless network first on the basis of the communication unit 110 (609). Additionally, the control unit 160 may perform a search for a wireless access point in the vicinity.

The control unit 160 checks whether a designated wireless access point contained in the connection designation list 151 is found among found wireless access points (611). When a designated wireless access point contained in the connection designation list 151 is not found, the control unit 160 returns to step 607 to continue utilization of the sensor unit 170. When a designated wireless access point contained in the connection designation list 151 is found, the control unit 160 checks whether the found designated wireless access point satisfies a preset condition such as maintenance of wireless signal strength at a given level or higher for a given time (613). When the found designated wireless access point satisfies the preset condition, the control unit 160 establishes a connection to the designated wireless access point for service provisioning (615). When the found designated wireless access point fails to satisfy the preset condition, the control unit 160 does not establish a connection to the designated wireless access point and returns to step 607 to repeat the above procedure.

When the connection restriction mode is not activated at step 603, the control unit 160 checks whether the regular connection mode is activated (617). When the regular connection mode is not activated, the control unit 160 establishes a connection to a wireless network through the communication unit 110 (619). When the regular connection mode is activated, the control unit 160 establishes a connection to a wireless access point according to the regular connection mode (621). That is, the control unit 160 may establish a connection to a wireless access point, which has acceptable received signal strength without security restrictions or has a record of connection, among located wireless access points.

In FIG. 6, it is described that when the mobile terminal 100 is not in motion after the connection restriction mode is activated, the control unit 160 proceeds to step 617 for the regular connection mode. However, the present disclosure is not limited thereto. That is, as described before, although the mobile terminal 100 is not in motion, when a designated wireless access point registered in the connection designation list 151 is present close to the mobile terminal 100, the control unit 160 may establish a connection to the designated wireless access point.

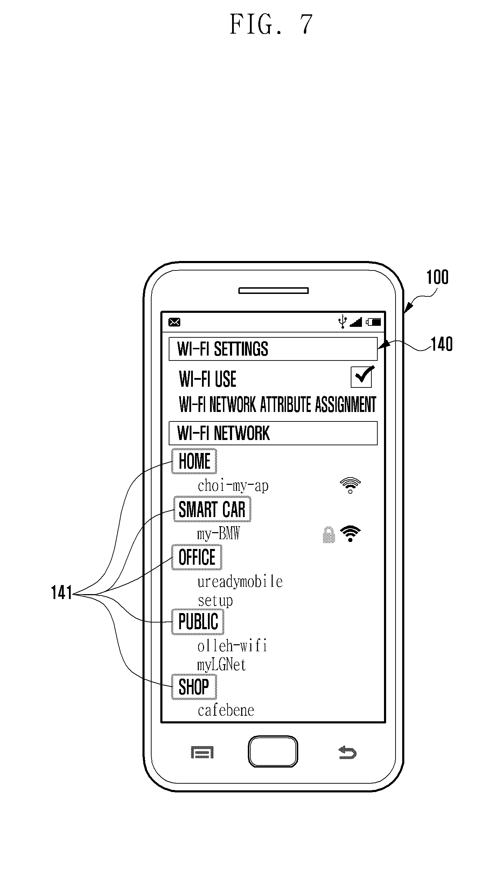

FIG. 7 is a screen representation illustrating a connection designation list 151 according to an embodiment of the present disclosure.

Referring to FIG. 7, attributes 141 may be assigned to designated wireless access points listed on the display unit 140 of the mobile terminal 100. Such attributes 141 may be defined directly by an installer, designer or operator of a designated wireless access point or by default. As shown, the display unit 140 may display various attributes 141 including "HOME", "SMART CAR", "OFFICE", "PUBLIC" and "SHOP". A designated wireless access point may be associated with a specific attribute. For example, a designated wireless access point with SSID name "choi-my-ap" may be associated with "HOME" attribute, and a designated wireless access point with SSID name "my-BMW" may be associated with "SMART CAR" attribute. Public designated wireless access points with SSID names "olleh-wifi" and "myLGNet" may be associated with "PUBLIC" attribute. An attribute may be newly defined by the user or be registered when a designated wireless access point with a specific attribute is located. The user may delete one of the attributes 141 and may define a new one if necessary. The user may associate a designated wireless access point with a specific attribute and may dissociate a designated wireless access point from a specific attribute.

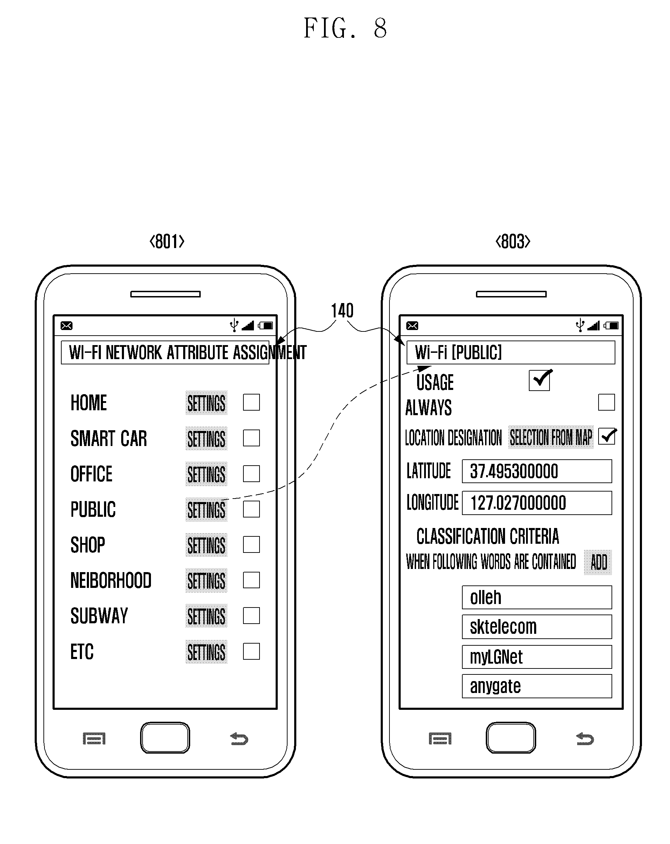

"ETC" attribute may be an item to which a search log of a wireless access point not associated with a predefined attribute may be attached. "ETC" attribute may be associated with a wireless access point having an attribute not matching a predefined attribute in the attribute table described before. The user may select "ETC" attribute and associate a found wireless access point with a predefined attribute to thereby add the wireless access point to the connection designation list 151, or may define a new attribute and associate a designated wireless access point with the new attribute. FIG. 8 illustrates a screen for configuring a connection designation list 151 according to an embodiment of the present disclosure.

Referring to FIG. 8, the mobile terminal 100 may provide a setting menu or setting icon for configuring the connection designation list 151. When the setting menu or setting icon is selected, the mobile terminal 100 may output a setting screen for the connection designation list 151 on the display unit 140 as indicated by reference numeral 801.

As shown, the setting screen may be configured to support addition of an attribute and removal of a selected item. The attributes described in FIG. 7 may be arranged and a setting screen may be provided for setting a particular attribute. Such a setting screen may be provided by selecting a menu on a screen as shown in FIG. 7. For example, when the user selects "PUBLIC" item, the display unit 140 may output a screen as indicated by reference numeral 803.

As indicated by reference numeral 803, the mobile terminal 100 may provide an item for usage selection, an item for location designation, and an item for classification criteria selection. Classification criteria may be related to, for example, communication service providers operating wireless access points. The item for location designation may indicate that the corresponding attribute is usable only at the designated location. Hence, when the Wi-Fi module 180 is activated in a state where the mobile terminal 100 is placed at the designated location, the mobile terminal 100 may search for only wireless access points deployed by at least one user specified communication service provider at the location. Here, according to settings, without an activation request for the Wi-Fi module 180, the control unit 160 may indentify the location of the mobile terminal 100 and automatically activate, when the location is a designated location, the Wi-Fi module 180 to search for and connect to a designated wireless access point contained in the connection designation list 151. When a connection is established, the control unit 160 may suppress a search for a different wireless access point.

In the above description, a designated wireless access point is depicted as being associated with one predefined attribute. However, the present disclosure is not limited thereto. That is, multiple designated wireless access points may be associated with "HOME" attribute. For example, when the user uses multiple houses, wireless access points installed in the multiple houses may be associated with "HOME" attribute. When the user uses multiple cars, multiple designated wireless access points may be associated with "SMART CAR" attribute. Hence, the mobile terminal 100 may easily search for a group of designated wireless access points according to selection of a specific attribute associated with multiple designated wireless access points. In the present disclosure, the same operation scheme may be specified for a group of multiple designated wireless access points and designated wireless access points in the group may be searched or not searched in the same manner.

In the above description, designated wireless access points are classified and managed according to high-level attributes. However, as described before, the present disclosure supports classification and management of designated wireless access points according to a low-level attribute. For example, the present disclosure may assign an attribute to wireless access points using the same channel and support a search for only a designated wireless access point associated with the attribute according to selection of "same channel" attribute. As described hereinabove, the method of controlling connection to wireless access points according to an embodiment of the present disclosure may specify operation schemes for wireless access points according to predefined attributes and permit connection only to a located wireless access point having an attribute matching a predefined attribute of the attribute table set in advance. Hence, the method may suppress unnecessary search for a wireless access point and may block pop-up of a window for wireless access point selection although a search has been unnecessarily performed. As described above, the method of controlling connection to wireless access points and the mobile terminal supporting the same according to an embodiment of the present disclosure permit connection only to a designated wireless access point in a user specified environment, blocking unnecessary search for and unnecessary connection to a wireless access point. In addition, the present disclosure may reduce consumption of battery power and radio resources due to unnecessary execution of a search and connection procedure by stopping additional search after establishment of connection to a wireless access point.

If necessary, the mobile terminal may further include various components. That is, although not shown, the mobile terminal serving as a communication device may further include a local-area communication module for local area communication, a data communication interface based on wired and wireless communication, an Internet communication module for Internet access, and a digital broadcast reception module for receiving and playing digital broadcasts. With the digital convergence trend, it should be apparent to those skilled in the art that the mobile terminal may further include a unit comparable to the above-described units, and one unit of the mobile terminal may be removed or replaced with another unit.

The mobile terminal of the present disclosure may be any information and communication appliance or multimedia appliance, such as a mobile communication terminal based on communication protocols supporting various communication systems, a portable multimedia player (PMP), a digital broadcast receiver, a personal digital assistant (PDA), a music player like an MP3 player, a portable game console, a smartphone, a laptop computer, or a handheld computer.

Hereinabove, exemplary embodiments of the present disclosure have been described with reference to the accompanying drawings. Specific terms or words used in the description should be construed in accordance with the spirit of the present disclosure without limiting the subject matter thereof. It should be understood that many variations and modifications of the basic inventive concept described herein will still fall within the spirit and scope of the present disclosure as defined in the appended claims. Although the present disclosure has been described with exemplary embodiments, various changes and modifications may be suggested to one skilled in the art. It is intended that the present disclosure encompass such changes and modifications as fall within the scope of the appended claims.

## Claims

1. A method for managing a connection to a wireless access point, comprising:
searching for only a designated wireless access point registered in a preset connection designation list by use of a Wi-Fi module or determining whether a wireless access point identified by the Wi-Fi module is the designated wireless access point registered in the preset connection designation list; and
establishing, in response to the designated wireless access point being identified, a connection to the designated wireless access point.

2. The method of claim 1, further comprising blocking a search for an additional wireless access point after the connection to the designated wireless access point is established.

3. The method of claim 1, wherein the establishing the connection comprises:
identifying, in response to multiple designated wireless access points being identified, priorities of the multiple designated wireless access points; and
establishing a connection to one of the designated wireless access points based on the identified priorities.

4. The method of claim 1, further comprising one of:
searching for, in response to no designated wireless access point being identified, wireless access points not registered in the connection designation list, and establishing, in response to identifying one or more non-registered wireless access points, a connection to one of the one or more identified non-registered wireless access points; or
searching for, in response to a connection to the designated wireless access point failing, another designated wireless access point at regular intervals.

5. The method of claim 1, wherein the establishing the connection further comprises one of:
stopping, in response to the mobile terminal moving at least a threshold speed before connection establishment to the designated wireless access point, a search for and connection to a wireless access point, and establishing a connection to a wireless network through a communication unit of the mobile terminal;
establishing, in response to the mobile terminal moving at least a threshold speed before connection establishment to the designated wireless access point, a connection to a wireless network through the communication unit first, and then searching for the designated wireless access point and establishing, in response to the designated wireless access point being identified, a connection to the found designated wireless access point; or
searching for, in response to the mobile terminal moving at least a threshold speed before connection establishment to the designated wireless access point and a search for the designated wireless access point failing, wireless access points, and establishing a connection to one of the wireless access points.

6. The method of claim 1, wherein establishing the connection further comprises one of:
sustaining, in response to the mobile terminal moving at least a threshold speed after connection establishment to the designated wireless access point, the connection to the designated wireless access point; or
releasing, in response to the mobile terminal moving at least a threshold speed after connection establishment to the designated wireless access point, the connection to the designated wireless access point, and establishing a connection to one of identified wireless access points.

7. The method of claim 1, further comprising at least one of:
registering a new wireless access point in the connection designation list; or
deregistering a registered wireless access point from the connection designation list.

8. The method of claim 1, further comprising:
identifying a location of the mobile terminal; and
automatically activating, in response to identifying the mobile terminal present at a pre-specified location, the Wi-Fi module and establishing a connection to a pre-specified designated wireless access point for the pre-specified location.

9. The method of claim 1, further comprising:
searching for a wireless access point by use of a Wi-Fi module;
determining, when the wireless access point has an attribute matching a preset attribute table, whether the attribute indicates connection; and
establishing, in response to determining that the attribute indicates connection, a connection to the wireless access point, and not establishing, in response to determining that the attribute indicates non-connection, the connection to the wireless access point.

10. The method of claim 9, further comprising classifying, when a wireless access point having an attribute not matching the attribute table is identified, the wireless access point into another category.

11. A mobile terminal capable of managing a connection to a wireless access point, comprising:
a Wi-Fi module configured to connect to a wireless access point;
a storage unit configured to store a connection designation list in which at least one designated wireless access point is registered; and
a control unit configured to conduct a search based on the Wi-Fi module by controlling an operation to search for a designated wireless access point registered in the connection designation list.

12. The mobile terminal of claim 11, wherein the control unit is configured to control an operation to block a search for an additional wireless access point after connection establishment to a designated wireless access point.

13. The mobile terminal of claim 11, wherein, in response to multiple designated wireless access points being identified, the control unit is configured to identify priorities of the designated wireless access points and control establishment of a connection to one of the designated wireless access points based on the identified priorities.

14. The mobile terminal of claim 11, wherein the control unit is configured to one of:
control a search for, in response to no designated wireless access point being identified, wireless access points not registered in the connection designation list and control establishment of a connection to one of the identified non-registered wireless access points, or
control a search for, in response to a connection to the designated wireless access point failing, another designated wireless access point at regular intervals.

15. The mobile terminal of claim 11, further comprising:
a sensor unit to sense a movement of the mobile terminal,
wherein the control unit is configured to one of:
control an operation to stop, in response to the mobile terminal moving at least a threshold speed before connection establishment to a designated wireless access point, a search for and connection to a wireless access point and establish a connection to a wireless network through a communication unit of the mobile terminal,
control an operation to establish, in response to the mobile terminal moving at least a threshold speed before connection establishment to the designated wireless access point, a connection to a wireless network through the communication unit first and then search for the designated wireless access point and establish, in response to the designated wireless access point being identified, a connection to the identified designated wireless access point, or
control an operation to search for, in response to the mobile terminal moving at least a threshold speed before connection establishment to the designated wireless access point and a search for the designated wireless access point failing, wireless access points and establish a connection to one of the wireless access points.

16. The mobile terminal of claim 11, further comprising:
a sensor unit to sense a movement of the mobile terminal,
wherein the control unit is configured to:
control an operation to sustain, in response to the mobile terminal moving at least a threshold speed after connection establishment to the designated wireless access point, the connection to the designated wireless access point, or
control an operation to release, in response to the mobile terminal moving at least a threshold speed after connection establishment to the designated wireless access point, the connection to the designated wireless access point and establish a connection to one of identified wireless access points.

17. The mobile terminal of claim 11, further comprising:
a display unit to provide at least one of a screen for registering a new wireless access point in the connection designation list, or a screen for deregistering a registered wireless access point from the connection designation list.

18. The mobile terminal of claim 11, further comprising:
a location identification sensor,
wherein the control unit is configured to control an operation to automatically activate, in response to an identification that the mobile terminal is placed at a pre-specified location, the Wi-Fi module and control establishment of a connection to a pre-specified designated wireless access point for the pre-specified location.

19. The mobile terminal of claim 11, wherein the control unit is configured to control a process for:
searching for a wireless access point by use of the Wi-Fi module;
determining, when the wireless access point has a preset attribute, whether the attribute indicates user selection; and
establishing, in response to determining that the attribute indicates user selection, a connection to the wireless access point, and not establishing, in response to determining that the attribute indicates non-user selection, a connection to the wireless access point and registering the wireless access point in the connection designation list with a new attribute.

20. The mobile terminal of claim 19, wherein the control unit is configured to control an operation to classify, when a wireless access point not having a preset attribute is identified, the wireless access point into another category.
